(19) Europäisches Patentamt / European Patent Office / Office européen des brevets

(11) **EP 3 872 521 A1**

(12) **EUROPÄISCHE PATENTANMELDUNG**

(43) Veröffentlichungstag:
**01.09.2021   Patentblatt 2021/35**

(21) Anmeldenummer: **21152485.5**

(22) Anmeldetag: **20.01.2021**

(51) Int Cl.:
$G01S\ 7/48$ (2006.01)       $G01S\ 17/88$ (2006.01)
$G01S\ 17/89$ (2020.01)     $G01S\ 17/931$ (2020.01)
$B66F\ 9/06$ (2006.01)      $B66F\ 9/075$ (2006.01)
$B66F\ 9/20$ (2006.01)      $B66F\ 9/24$ (2006.01)
$G01S\ 7/40$ (2006.01)      $G01S\ 7/497$ (2006.01)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **27.02.2020   DE 102020105215**

(71) Anmelder: **Jungheinrich Aktiengesellschaft 22047 Hamburg (DE)**

(72) Erfinder: **Bistry, Hannes 25421 Pinneberg (DE)**

(74) Vertreter: **Hauck Patentanwaltspartnerschaft mbB Postfach 11 31 53 20431 Hamburg (DE)**

(54) **VERFAHREN ZUM KALIBRIEREN EINER SENSOREINHEIT EINES FLURFÖRDERZEUGS**

(57)    Verfahren zum Kalibrieren einer an einem Lasttragmittel eines Flurförderzeugs angeordneten Sensoreinheit, mit den Schritten: Bestimmen einer ersten Position der Sensoreinheit relativ zu einem abseits des Flurförderzeugs befindlichen Objekt, Verschieben der Sensoreinheit relativ zu dem Objekt entlang einer ersten Verschiebungsrichtung um eine bekannte erste Distanz, Bestimmen einer zweiten Position der Sensoreinheit relativ zu dem Objekt, Ermitteln der räumlichen Anordnung der Sensoreinheit relativ zu dem die Sensoreinheit aufweisenden Lasttragmittel basierend auf den zwei Positionen, der Verschiebungsrichtung und der Distanz zwischen den Positionen.

Fig. 1

EP 3 872 521 A1

**Beschreibung**

Die Erfindung betrifft ein Verfahren zum Kalibrieren einer an einem Lasttragmittel eines Flurförderzeugs angeordneten Sensoreinheit. Das Kalibrieren meint hierbei das Ermitteln der räumlichen Anordnung der Sensoreinheit relativ zu dem Lasttragmittel.

Derartige Sensoreinheiten werden an dem Lasttragmittel eines Flurförderzeugs angeordnet, um einen durch das Lasttragmittel aufzunehmenden Ladungsträger zu erkennen. Dies ermöglicht beispielsweise das automatische Ausrichten des Lasttragmittels oder des gesamten Flurförderzeugs zum Ladungsträger und insbesondere auch eine automatisierte Aufnahme des Ladungsträgers durch das Flurförderzeug. Die Sensoreinheit kann bspw. eine 3D-Kamera umfassen zur Aufnahme des Objekts. Für eine solche Automatisierung ist die möglichst genaue Kenntnis der räumlichen Anordnung der Sensoreinheit relativ zu dem Lasttragmittel, beispielsweise relativ zu den Lastgabeln, nötig. Nur so kann gewährleistet werden, dass ein durch die Sensoreinheit erkannter Ladungsträger von dem Lasttragmittel auch zielgenau aufgenommen wird. Hierzu wird die Sensoreinheit kalibriert. Die im Rahmen des Kalibriervorgangs ermittelte räumliche Anordnung der Sensoreinheit umfasst dabei insbesondere Informationen über die Anbauposition, d.h. über die drei Raumkoordinaten im kartesischen Koordinatensystem, und über die Anbauwinkel, d.h. die Winkelpositionen der Sensoreinheit in Bezug auf die drei Raumachsen.

Bisherige Kalibrierverfahren sehen vor, die Sensoreinheit händisch möglichst exakt am Lasttragmittel anzuordnen, was zeitintensiv und fehleranfällig ist. Teilweise wird daher auch das Sensorsignal der Sensoreinheit während des Kalibrierverfahrens ausgewertet, wobei das Flurförderzeug beispielsweise auf eine definierte Position verfahren wird und in der Umgebung des Flurförderzeugs angeordnete optische Marker detektiert werden. Auch dies ist jedoch aufwendig. Zudem ist die Kalibrierung dann nur in einem definierten, für die Kalibrierung vorgesehenen Umfeld möglich. Insbesondere für eine spätere Nachkalibrierung muss das Flurförderzeug wieder in eine entsprechende Umgebung verfahren werden.

In EP 3 219 663 A1 wird ein Verfahren beschrieben, bei dem sowohl der Sensor als auch ein für die Positionsbestimmung verwendetes Referenzobjekt an einer Lastgabel des Lasttragmittels angeordnet sind. Der Sensor ermittelt in regelmäßigen Abständen die Position des Referenzobjekts, wobei ein Computer die ermittelten Positionsdaten mit gespeicherten Referenzdaten vergleicht. Das an der Lastgabel angeordnete Referenzobj ekt schränkt das Sichtfeld des Sensors ein und läuft Gefahr, beim Betrieb des Flurförderzeugs zu stören oder beschädigt zu werden.

Der Erfindung liegt die Aufgabe zugrunde, ein einfaches und einen hohen Automatisierungsgrad aufweisendes Kalibrierverfahren zum Kalibrieren einer Sensoreinheit an einem Flurförderzeug bereitzustellen.

Die Erfindung löst die Aufgabe durch ein Verfahren gemäß Anspruch 1. Vorteilhafte Ausgestaltungen sind Gegenstand der abhängigen Ansprüche, der Beschreibung sowie der Figuren.

Das erfindungsgemäße Verfahren zum Kalibrieren einer an einem Lasttragmittel eines Flurförderzeugs angeordneten Sensoreinheit umfasst die folgenden Schritte:

a) Bestimmen einer ersten Position der Sensoreinheit relativ zu einem abseits des Flurförderzeugs befindlichen Objekt,
b) Verschieben der Sensoreinheit relativ zu dem Objekt entlang einer bekannten ersten Verschiebungsrichtung um eine erste Distanz,
c) Bestimmen einer zweiten Position der Sensoreinheit relativ zu dem Objekt,
d) Ermitteln der räumlichen Anordnung der Sensoreinheit relativ zu dem die Sensoreinheit aufweisenden Lasttragmittel basierend auf den zwei Positionen, der Verschiebungsrichtung und der Distanz zwischen den Positionen.

Erfindungsgemäß ist also vorgesehen, zumindest zwei Positionsmessungen der Sensoreinheit an unterschiedlichen Positionen relativ zu dem Objekt durchzuführen, wobei die Sensoreinheit zwischen den beiden Positionen in einer bekannten Verschiebungsrichtung verfahren wird. Die beiden Positionen sind grundsätzlich in einer bekannten Verschiebungsrichtung voneinander verschoben, beispielsweise entlang einer der drei Raumachsen. Die Distanz, um die die Sensoreinheit zwischen den beiden Positionen verschoben wird, kann grundsätzlich bekannt, beispielsweise in einer Steuereinheit des Flurförderzeugs hinterlegt sein. Auch kann die Distanz nachträglich ermittelt werden, wie noch erläutert wird. Die Sensoreinheit kann insbesondere eine Kameraeinheit sein, kann beispielsweise eine 3-D Kamera umfassen. Das Objekt kann folglich an zumindest zwei unterschiedlichen Kamerapositionen aufgenommen werden, wobei aus den unterschiedlichen Aufnahmen des Objekts und aus dem Abstand der Aufnahmepositionen anschließend die räumliche Anordnung der Sensoreinheit relativ zu dem Lasttragmittel bestimmt werden kann.

Das Kalibrieren meint hierbei das Ermitteln der räumlichen Anordnung der Sensoreinheit relativ zu dem Lasttragmittel, wie eingangs bereits erwähnt. Die im Rahmen der Kalibrierung ermittelte räumliche Anordnung bezeichnet insbesondere die extrinsischen Parameter der Sensoreinheit, also die Anbauposition der Sensoreinheit in Bezug auf die drei Raumkoordinaten x, y, z in einem Koordinatensystem des Lasttragmittels bzw. Flurförderzeugs sowie die Anbauwinkel in Bezug auf diese Raumkoordinaten, also insbesondere rot_x, rot_y, rot z. Das Ermitteln dieser räumlichen Anordnung aufgrund der bekannten Verschiebungsrichtung, der zumindest zwei Positionen und der Distanz zwischen diesen Positionen kann beispielsweise durch Lösung der relevanten Gleichungen nach der Methode der kleinsten Quadrate erfolgen, insbesondere mit einer linearen Ausgleichsgeraden (im Englischen auch "least linear square" genannt). Grundsätzlich können auch vergleichbare Verfahren oder auch geschlossene Verfahren zur Lösung verwendet werden.

Der Erfindung liegt die Erkenntnis zugrunde, dass eine solche Sensoreinheit auf Grundlage der durch die Sensoreinheit aufgenommenen Daten während eines Kalibriervorgangs einfach kalibriert werden kann, wenn die Sensoreinheit während des Kalibriervorgangs zwischen den einzelnen Aufnahmepositionen in stets bekannter Richtung verschoben wird und ein während des Kalibriervorgangs ortsfestes, abseits des Flurförderzeugs angeordnetes Objekt durch die Sensoreinheit aufgenommen wird. Zum einen sollte also zwischen den einzelnen Positionsbestimmungen die Sensoreinheit stets in einer bekannten Richtung verschoben werden. Dies kann beispielsweise geschehen, in dem eine oder mehrere Arbeitsfunktionen des Flurförderzeugs zum Verschieben der Sensoreinheit genutzt werden. So können als Arbeitsfunktionen beispielsweise ein Mastvorschub oder ein Masthub des Flurförderzeugs genutzt werden, um das Lasttragmittel und damit die Sensoreinheit zu verschieben, wie später noch erläutert wird. Zudem sollte das abseits des Flurförderzeugs liegende, also nicht mit dem Flurförderzeug verbundene Objekt zumindest während des Kalibriervorgangs ortsfest sein. Somit ist sichergestellt, dass das Objekt beim Verschieben der Sensoreinheit nicht seine Position oder Ausrichtung ändert und somit aus unterschiedlichen Perspektiven durch die Sensoreinheit aufgenommen wird.

Die beiden Positionsmessungen liefern jeweils Raumkoordinaten des Objekts in einem Koordinatensystem der Sensoreinheit sowie den Abstand zwischen den beiden Positionen. Aus diesen Informationen wird erfindungsgemäß auf die räumliche Anordnung der Sensoreinheit an dem Lasttragmittel bzw. dem Flurförderzeug geschlossen, es werden also die Raumkoordinaten bzw. Raumwinkel der Sensoreinheit in einem Koordinatensystem des Lasttragmittels bzw. Flurförderzeugs bestimmt. Es erfolgt somit eine Koordinatentransformation.

Das Objekt kann beispielsweise ein durch das Flurförderzeug aufnehmbarer Ladungsträger, insbesondere eine Palette, sein. Das Lasttragmittel kann nach einer Ausgestaltung eine Lastgabel sein, mit einem Gabelrücken und mindestens einem sich von dem Gabelrücken forterstreckenden Gabelarm, wobei die Sensoreinheit an dem Gabelrücken oder an einem der Gabelarme angeordnet ist. Insbesondere kann das Lasttragmittel zwei sich von dem Gabelrücken parallel forterstreckende Gabelarme aufweisen. Das Flurförderzeug kann folglich ein Gabelstapler sein, insbesondere ein Schubmaststapler. Die insbesondere eine 3D-Kamera umfassende Sensoreinheit kann beispielsweise an dem Gabelrücken oder an dem Gabelarm bzw. einem der Gabelarme angeordnet sein, wobei der Gabelarm/ die Gabelarme innerhalb eines Aufnahmebereichs der Sensoreinheit liegen.

Ist die Ausrichtung des Lasttragmittels zu dem Objekt nicht genau bekannt, können unter Umständen nur die Anbauwinkel zuverlässig ermittelt werden, die Anbauposition ist dann ggf. nur von geringer Aussagekraft. Es kann daher nach einer Ausgestaltung vorgesehen sein, dass die Ausrichtung des Lasttragmittels zu dem Objekt bekannt ist. Beispielsweise kann das Lasttragmittel bzw. das gesamte Flurförderzeug vor der Durchführung der erläuterten Kalibrierschritte, also vor der ersten Positionsbestimmung, zunächst in eine Referenzposition relativ zu dem Objekt gebracht werden. In dieser Referenzposition ist die Ausrichtung des Lasttragmittels zu dem Objekt bekannt. Bei der Referenzposition kann es sich um eine Position handeln, die in einem nachfolgenden regulären Betrieb des Flurförderzeugs durchfahren wird. Die Referenzposition kann beispielsweise eine Position sein, in welcher das Flurförderzeug mithilfe des Lasttragmittels den Ladungsträger optimal aufnehmen kann. So kann beispielsweise in der Referenzposition die Lastgabel derart zu einer aufzunehmenden Palette ausgerichtet sein, dass nur durch ein Vorwärtsbewegen der Lastgabel deren Gabelarme optimal in die Gabelaufnahmen der Palette eingeführt werden können. In diesem Fall kann bei bekannter Lage der Gabelarme relativ zu dem Objekt in der Referenzposition mittels des Verfahrens ebenfalls die räumliche Anordnung, einschließlich der Anbauposition, der Sensoreinheit relativ zu dem Objekt und somit zu den Gabelarmen ermittelt werden. Ausgehend von einer solchen Referenzposition können die erläuterten Schritte des Kalibrierverfahrens starten, wobei die unterschiedlichen Positionsmessungen beispielsweise bei unterschiedlichen Ausfahrpositionen des Schubmastes erfolgen können. Das Anfahren einer solchen Referenzposition erlaubt eine besonders exakte Bestimmung der räumlichen Anordnung, insbesondere auch der Raumkoordinaten, der Sensoreinheit relativ zu dem Lasttragmittel.

Wie der Erfinder festgestellt hat, sind zwei Positionsmessungen an unterschiedlichen Positionen der Sensoreinheit für das Kalibrierverfahren grundsätzlich ausreichend. Dies gilt zumindest dann, wenn nicht alle drei Anbauwinkel ermittelt werden müssen, weil zumindest einer der Anbauwinkel bereits bekannt ist. So kann die Sensoreinheit beispielsweise lediglich um zwei Raumachsen verstellbar an dem Lasttragmittel angeordnet sein während um die dritte Raumachse keine Verstellbarkeit gegeben ist. In Bezug auf diesen einen Raumwinkel kann die räumliche Anordnung der Sensoreinheit an dem Lasttragmittel folglich bereits bekannt sein. Zur vollständigen Ermittlung der räumlichen Anordnung müssen dann neben den drei Ortskoordinaten nur zwei Anbauwinkel bestimmt werden. Das erfindungsgemäße Verfahren ist dann besonders einfach. Das Verfahren soll nachfolgend an einem Beispiel erläutert werden.

Zu Beginn des Verfahrens kann das Flurförderzeug, beispielsweise durch eine Bedienperson, zunächst so vor dem Ladungsträger als Objekt positioniert werden, dass das Lasttragmittel den Ladungsträger möglichst optimal aufnehmen kann. Diese Referenzposition ist zudem derart gewählt, dass die Sensoreinheit die Palette auch erkennen kann. In dieser Referenzposition erfolgt nun eine erste Positionsmessung, es wird also eine erste Position der Sensoreinheit relativ zu dem Ladungsträger bestimmt. Es kann hierbei eine einmalige Positionsmessung erfolgen oder auch eine mehrfache Messung, wobei anschließend aus den mehrfachen Messungen ein Mittelwert gebildet wird. Für die Positionsmessung kann durch die Sensoreinheit eine Mustererkennung erfolgen. Beispielsweise kann aus den Sensordaten die Mitte der Ladungsträgerfront ermittelt werden. Auch kann grundsätzlich die Position durch eine Benutzereingabe anhand einer Bildschirmanzeige festgelegt werden. In einem anschließenden Schritt wird der Abstand des Lasttragmittels und damit der Sensoreinheit zu dem Ladungsträger verändert, die Sensoreinheit wird also relativ zu dem Ladungsträger verschoben. Dieses Verschieben erfolgt dabei bezogen auf ein Koordinatensystem des Flurförderzeugs bevorzugt entlang genau einer Achse, beispielsweise der z-Achse, um eine erste Distanz. Anschließend erfolgt eine erneute Positionsmessung, welche eine zweite Position der Sensoreinheit relativ zu dem Ladungsträger ausgibt. In einem weiteren Schritt wird anschließend der euklidische Abstand der beiden Positionsmessungen, beispielsweise nach dem Pythagoras, bestimmt. Die räumliche Anordnung der Sensoreinheit in Bezug auf das Lasttragmittel kann aus den beiden Positionen, der Verschiebungsrichtung sowie der Distanz ermittelt werden. Bei relativ zu dem Ladungsträger bezüglich der z-Achse rotatorisch fixierter Sensoreinheit können so die Anbauposition in Bezug auf die räumlichen Achsen x, y, z und zwei Anbauwinkel rot_x, rot_y ermittelt werden.

Nach einer Ausgestaltung umfasst das Verfahren den Schritt Ermitteln der Distanz als Abstand zwischen den beiden Positionen. Wie erläutert, genügen für das Ermitteln der räumlichen Anordnung der Sensoreinheit grundsätzlich zwei Positionsbestimmungen in unterschiedlichen Kalibrierpositionen, wenn zumindest ein Anbauwinkel bekannt ist. Nach einer Fortbildung des Verfahrens kann die räumliche Anordnung der Sensoreinheit jedoch auch einschließlich der dritten Rotation bestimmt werden. Nach dieser Ausgestaltung wird die räumliche Anordnung der Sensoreinheit relativ zu dem die Sensoreinheit aufweisenden Lasttragmittel nicht lediglich basierend auf zwei Positionen und der Distanz zwischen diesen beiden Positionen ermittelt, sondern basierend auf insgesamt zumindest drei Positionen, den Verschiebungsrichtungen und den Distanzen zwischen der ersten Position und der zweiten Position sowie der zweiten Position und der dritten Position. Folglich kann das Verfahren anschließend an die zweite Positionsbestimmung die folgenden Schritte vorsehen: Erneutes Verschieben der Sensoreinheit relativ zu dem Objekt entlang einer zu der ersten Verschiebungsrichtungsenkrechten, ebenfalls bekannten zweiten Verschiebungsrichtung um eine zweite Distanz, Bestimmen einer dritten Position der Sensoreinheit relativ zu dem Objekt, Ermitteln der räumlichen Anordnung der Sensoreinheit relativ zu dem die Sensoreinheit aufweisenden Lasttragmittel basierend auf den drei Positionen, den beiden Verschiebungsrichtungen und den beiden Distanzen. Das Verschieben der Sensoreinheit entlang der zweiten Richtung erfolgt dabei insbesondere mithilfe einer anderen Arbeitsfunktion des Flurförderzeugs, welche orthogonal zu der ersten Arbeitsfunktion arbeitet. Dies kann beispielsweise der Masthub sein, welcher das Lasttragmittel und damit die Sensoreinheit senkrecht zu dem Mastvorschub bewegt. Es ergibt sich dann ein System aus Gleichungen, welche wiederum beispielsweise mittel der Methode des least linear square gelöst werden können. Das Ergebnis ist die räumliche Anordnung der Sensoreinheit relativ zu dem Lasttragmittel, wobei die Anordnung in diesem Fall die Anbauposition in Bezug auf die räumlichen Achsen x, y, z sowie auch die drei Anbauwinkel rot_x, rot_y, rot_z in Bezug auf diese Achsen umfasst.

Nach einer Ausgestaltung werden die Distanzen als Abstand zwischen den jeweiligen Positionen ermittelt. Wie bereits erwähnt, kann die erste Distanz bzw. die zweite Distanz, um welche die Sensoreinheit relativ zu dem Objekt verschoben wird, grundsätzlich vorbekannt sein. Nach der vorliegenden Ausgestaltung müssen diese Distanzen jedoch nicht bekannt sein, sondern werden im Rahmen des Verfahrens ermittelt. Es kann also vorgesehen sein, dass vor dem Ermitteln der räumlichen Anordnung der Sensoreinheit zunächst die erste Distanz und/oder, falls vorgesehen, auch die zweite Distanz ermittelt werden. Die Distanzen werden dabei insbesondere als euklidischer Abstand zwischen den jeweiligen Positionsmessungen bestimmt, die erste Distanz also als euklidischer Abstand zwischen der ersten Position P1 und der zweiten Position P2 und/oder die zweite Distanz als euklidischer Abstand zwischen der zweiten Position P2 und der dritten Position P3, beispielsweise nach dem Satz des Pythagoras. Die erfindungsgemäße Kalibrierung kann dann auch bei zunächst unbekannten Distanzen verwendet werden. Insbesondere ist das Verfahren auch ohne Positionserfassungsmittel, wie beispielsweise Positionssensoren, einsetzbar. Grundsätzlich kann jedoch vorgesehen sein, dass die erste Distanz und/oder die zweite Distanz über ein Positionserfassungssystem ermittelt wird.

Nach einer Ausgestaltung erfolgt das Verschieben der Sensoreinheit relativ zu dem Objekt jeweils entlang nur einer Raumachse. Beispielsweise kann die erste Richtung die z-Achse sein und die zweite Richtung, falls vorgesehen, die y-Achse. Das Verschieben der Sensoreinheit um die erste Distanz kann dann entlang der z-Achse erfolgen, während das Verschieben in die zweite Distanz entlang der zu der z-Achse senkrechten y-Achse erfolgt. Dies kann das Bestimmen der räumlichen Anordnung der Sensoreinheit wesentlich vereinfachen.

Wie bereits erwähnt, kann die Sensoreinheit auf unterschiedliche Art und Weise relativ zu dem Objekt verschoben werden. So wird nach einer Ausgestaltung die Sensoreinheit durch Verfahren des Flurförderzeugs selbst relativ zu dem Objekt verschoben. Beispielsweise kann das Flurförderzeug zwischen zwei Positionsmessung entlang der z-Achse nach vorn zum Objekt hin oder von dem Objekt fort verfahren werden. Auch kann nach einer Ausgestaltung die Sensoreinheit durch Einfahren oder Ausfahren eines das Lasttragmittel tragenden Schubmastes des Flurförderzeugs und/oder durch Einfahren oder Ausfahren eines das Lasttragmittel tragenden Hubmastes des Flurförderzeugs relativ zu dem Objekt verschoben werden. So kann beispielsweise durch Ausfahren des Schubmastes die Sensoreinheit entlang der ersten Verschiebungsrichtung, bspw. entlang der z-Achse, um die erste Distanz verschoben und durch anschließendes Ausfahren des Hubmastes, bspw. entlang der y-Achse, entlang der zweiten Verschiebungsrichtung um die zweite Distanz verschoben werden. Das Verwenden der Arbeitsfunktionen des Flurförderzeugs erlaubt eine besonders gut definierte Bewegung und führt zu einem besonders einfachen und gut automatisierbaren Kalibrierverfahren.

Nach einer Ausgestaltung wird die ermittelte räumliche Anordnung der Sensoreinheit auf einer Anzeigeeinheit des Flurförderzeugs dargestellt. Somit kann insbesondere die Ausrichtung des Lasttragmittels relativ zum Ladungsträger auf der Anzeigeeinheit dargestellt werden. Eine Bedienperson des Flurförderzeugs kann somit erkennen, ob das Flurförderzeug für die Aufnahme des Ladungsträgers korrekt ausgerichtet ist.

Nach einer Ausgestaltung wird der Kalibriervorgang während des Betriebs des Flurförderzeugs wiederholt. Der Kalibriervorgang, also das erfindungsgemäße Kalibrierverfahren, kann nach dieser Ausgestaltung auch im Betrieb des Flurförderzeugs genutzt werden. Wie der Erfinder erkannt hat, kann sich die Anbauposition der Sensoreinheit im späteren, auf den erstmaligen Kalibriervorgang nachfolgenden Betrieb des Flurförderzeugs aufgrund äußerer Einflüsse ändern. Solche äußeren Einflüsse können beispielsweise Stöße oder Kollisionen oder auch eine Reinigung des Flurförderzeugs bzw. der Sensoreinheit sein. Dies kann dazu führen, dass die ermittelte und insbesondere in einer Steuereinheit des Flurförderzeugs hinterlegte räumliche Anordnung der Sensoreinheit nicht mehr mit der tatsächlichen räumlichen Anordnung übereinstimmt. Ein Ladungsträger kann folglich u.U. nicht mehr exakt genug aufgenommen werden. Auch besteht die Gefahr von Sach- bzw. Personenschäden. Durch einen erneuten Kalibriervorgang während des Betriebs kann dieses Problem gelöst werden. Insbesondere kann in regelmäßigen zeitlichen Abständen ein erneuter Kalibriervorgang ausgeführt werden.

Nach einer Ausgestaltung wird der Kalibriervorgang über ein Bedienelement des Flurförderzeugs durch eine Bedienperson gestartet. Die Bedienperson kann also wählen, wann die Kalibrierung erfolgen soll. Insbesondere eine eventuell vorgesehene weitere, während des Betriebs des Flurförderzeugs erfolgende Kalibrierung kann somit über die Bedienperson zum gewünschten Zeitpunkt gestartet werden. Die Bedienperson kann das Flurförderzeug hierfür zunächst in die oben erläuterte Referenzposition relativ zum Ladungsträger verfahren. Der Kalibriervorgang kann jedoch auch vollautomatisch geschehen. So kann insbesondere auch die Referenzposition vollautomatisch durch das Flurförderzeug nach Starten des Kalibriervorgangs anfahrbar sein.

Die Erfindung betrifft zudem ein Flurförderzeug mit einer Steuereinheit, die dazu ausgebildet ist, das erläuterte, erfindungsgemäße Verfahren auszuführen. In der Steuereinheit des Flurförderzeugs kann die ermittelte räumliche Anordnung der Sensoreinheit hinterlegt werden.

Eine Ausgestaltung der Erfindung wird im Folgenden anhand von Figuren erläutert. Es zeigen:

Figur 1    zwei sehr schematische Ansichten eines Lasttragmittels und eines Ladungsträgers in Draufsicht aus das Lasttragmittel, und

Figur 2    eine sehr schematische seitliche Darstellung des Lasttragmittels.

Soweit nichts anderes angegeben ist, bezeichnen gleiche Bezugszeichen gleiche Gegenstände.

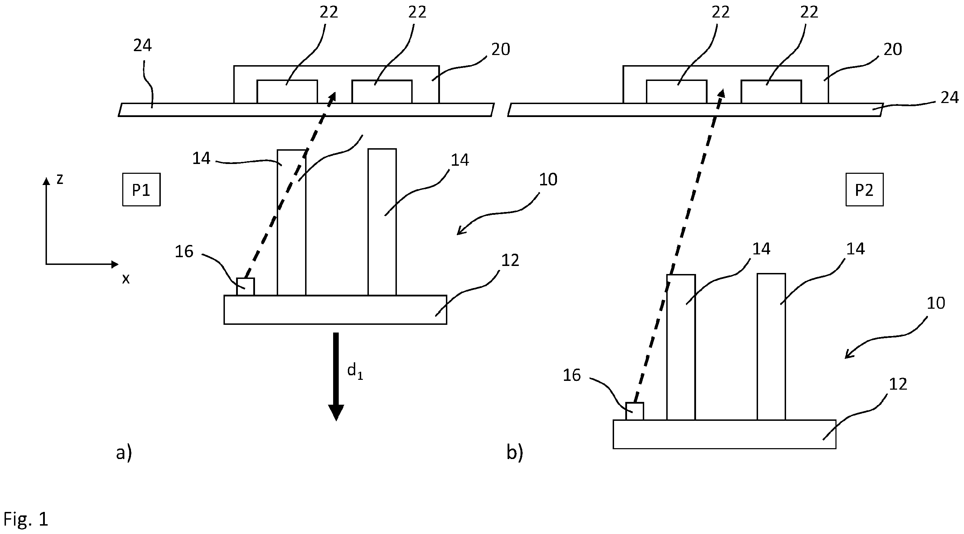

In den Figuren 1a und 1b ist jeweils ein als Lastgabel ausgebildetes Lasttragmittel 10 zu erkennen, welches einen Gabelrücken 12 und zwei sich von dem Gabelrücken 12 forterstreckende Gabelarme 14 aufweist. An dem Gabelrücken 12 ist eine Sensoreinheit 16 angeordnet. In den Figuren 1a, 1b ist das Lasttragmittel 10 in unterschiedlichen Abständen zu einer Palette 20 als Ladungsträger angeordnet. Die Palette 20 weist zwei Gabelaufnahmen 22 zur Aufnahme der Gabelarme 14 des Lasttragmittels 10 auf. Die Palette 20 ist auf einem Untergrund 24 angeordnet. Während das Lasttragmittel 10 in den Figuren 1a, 1b in einer Draufsicht dargestellt ist, ist die Palette 20 in einer Seitenansicht mit Blick auf die Gabelöffnungen 22 dargestellt.

Die Sensoreinheit 16 dient der Erkennung der Palette 20 und soll ermöglichen, dass die Gabelarme 14 des Lasttragmittels 10 möglichst genau mittig in die Gabelaufnahmen 22 der Palette 20 einfahren. Die Sensoreinheit 16 kann eine Kamera umfassen, insbesondere eine 3D-Kamera. Ein das Lasttragmittel 10 aufweisendes Flurförderzeug kann, über eine Steuereinheit, die Palette 20 mittels der Sensoreinheit 16 erkennen. Dies ist insbesondere für einen automatischen Betrieb des Flurförderzeugs notwendig. Es ist dabei wesentlich, dass die exakte Anordnung der Sensoreinheit 16 an dem Lasttragmittel 10 bekannt und beispielsweise in der Steuereinheit des Flurförderzeugs hinterlegt ist, da nur so aus der Sensoraufnahme (also insbesondere dem Kamerabild) auf die exakte Position des Lasttragmittels relativ zu der Palette rückgeschlossen werden kann. Hierfür muss zunächst eine Kalibrierung der Sensoreinheit erfolgen.

Zum Kalibrieren der Sensoreinheit wird das Flurförderzeug, beispielsweise durch eine Bedienperson, zunächst derart vor der Palette 20 positioniert, dass das Lasttragmittel 10 die Palette 20 möglichst optimal aufnehmen kann. Die Positionierung kann also insbesondere derart erfolgen, dass die Gabelarme 14 lediglich durch eine Vorwärtsbewegung des Lasttragmittels möglichst mittig in die Gabelaufnahmen 22 einfahren können. Diese Referenzposition ist zudem derart gewählt, dass die Sensoreinheit 16 die Palette 20 auch erkennen kann. In dieser Referenzposition erfolgt nun eine erste Positionsmessung, die eine erste Position P1 ausgibt, es wird also eine erste Position der Sensoreinheit 16 relativ zu der Palette 20 bestimmt. Dies ist in Fig. 1 a) ersichtlich. Es kann hierbei eine einmalige Positionsmessung erfolgen oder auch eine mehrfache Messung, wobei anschließend aus den mehrfachen Messungen ein Mittelwert gebildet wird. Für die Positionsmessung kann durch die Sensoreinheit eine Mustererkennung, beispielsweise der Mitte der Ladungsträgerfront, erfolgen.

In einem anschließenden Schritt wird der Abstand des Gabelrückens 12 und damit der Sensoreinheit 16 zu der Palette 20 verändert, die Sensoreinheit 16 wird also relativ zu der Palette 20 verschoben. Dieses Verschieben erfolgt dabei bezogen auf ein Koordinatensystem des Flurförderzeugs entlang genau einer Achse, nämlich vorliegend der z-Achse, in einer bekannten ersten Verschiebungsrichtung um eine erste Distanz $d_1$. Dieses Verschieben kann insbesondere durch Verstellen des Schubmastes nach hinten zu dem Flurförderzeug hin erfolgen. Das Lasttragmittel 10 wird somit von der in Figur 1a gezeigten Position relativ zu der Palette 20 zu der in Figur 1b gezeigten Position relativ zur Palette 20 verstellt. Anschließend erfolgt bei der in Figur 1b ersichtlichen Position des Lasttragmittels eine erneute Positionsmessung, welche eine zweite Position P2 der Sensoreinheit 16 relativ zu der Palette 20 ausgibt. In einem weiteren Schritt wird anschließend der euklidische Abstand $d_1$ zwischen den beiden Positionen P2 und P1, beispielsweise nach dem Pythagoras, bestimmt. Die räumliche Anordnung der Sensoreinheit 16 in Bezug auf das Lasttragmittel 10 kann aus den beiden Positionen P1, P2 sowie der Distanz $d_1$ ermittelt werden.

Hierfür kann beispielsweise die folgende Gleichung nach dem least linear square gelöst werden:

$$T(x,y,z,rot\_x,rot\_y,0)*P1=T(0,0,d,0,0,0)*T(x,y,z,rot\_x,rot\_y,0)*P2$$

Diesem Gleichungssystem liegt insbesondere die Theorie der affinen Abbildung und der erweiterten Abbildungsmatrix zugrunde. T(x,y,z,rot_x,rot_y,0) sind dabei insbesondere Abbildungsmatrizen, während T(0,0,d,0,0,0) einen Verschiebungsvektor darstellt. Das Lösen der Gleichung ergibt die Anbauposition x, y, z sowie die Anbauwinkel rot_x, rot_y und damit die räumliche Anordnung der Sensoreinheit relativ zum Lasttragmittel. Es wurde dabei angenommen, dass eine Drehung der Sensoreinheit um die z-Achse nicht möglich ist, beispielsweise aufgrund einer entsprechenden Fixierung der Sensoreinheit am Gabelrücken. Dies erleichtert das Kalibrierverfahren.

Grundsätzlich kann jedoch auch die dritte Rotation rot z bestimmt werden. Hierfür ist eine weitere Positionsmessung nötig. So kann mittels einer anderen Arbeitsfunktion des Flurförderzeugs, welche orthogonal zu der Arbeitsfunktion des Mastvorschubs arbeitet, eine dritte Position angefahren werden. Es kann sich hierbei insbesondere um einen Masthub handeln, welcher das Lasttragmittel 10 entlang in Figur 1 senkrechten y-Achse Verfahren kann. So kann anschließend an die zweite Positionsmessung ein erneutes Verschieben der Sensoreinheit 16 relativ zu der Palette 20 entlang der y-Achse um eine nicht dargestellte zweite Distanz $d_2$ erfolgen. In der somit angefahrenen, nicht dargestellten dritten Position P3 erfolgt erneut eine Positionsbestimmung der Sensoreinheit 16 relativ zu der Palette 20. Es wird anschließend der euklidische Abstand $d_2$ zu der zuvor ermittelten zweiten Position bestimmt. Anschließend kann wiederum mittels least linear square die räumliche Anordnung ermittelt werden, diesmal basierend auf den drei Positionen P1, P2, P3 und den beiden Distanzen $d_1$, $d_2$. Die zu lösenden Gleichungen können wie folgt aussehen:

$$T(x,y,z,rot\_x,rot\_y,rot\_z)*P1=T(0,0,d,0,0,0)*T(x,y,z,rot\_x,rot\_y,rot\_z)*P2$$

$$T(x,y,z,rot\_x,rot\_y,rot\_z)*P1=T(0,d\_2,d,0,0,0)*T(x,y,z,rot\_x,rot\_y,rot\_z)*P3$$

Durch Lösen der Gleichungssysteme kann folglich die räumliche Anordnung der Sensoreinheit umfassend die Koordinaten x, y, z, rot_x, rot_y sowie auch rot z bestimmt werden. Die unterschiedlichen Positionen, an denen die Messungen stattfinden, sind insbesondere so gewählt, dass die Detektion des Objektes mittels der Sensoreinheit zuverlässig funktioniert, also insbesondere ein geringes Sensorrauschen auftritt. Hierfür sollte der Abstand zwischen den Positionen hinreichend groß gewählt werden.

Mittels des erfindungsgemäßen Kalibrierungsverfahrens kann die räumliche Anordnung der Sensoreinheit an dem Lasttragmittel sehr exakt bestimmt werden. Somit kann im späteren Betrieb des Flurförderzeugs sichergestellt werden, dass eine durch die Sensoreinheit abgebildete Palette sich auch exakt an dem Ort befindet, der sich aus den Aufnahmedaten, also insbesondere dem Kamerabild ergibt. Somit kann eine genaue Ausrichtung des Lasttragmittels zur Palette und damit eine sichere und exakte Aufnahme der Palette durch das Lasttragmittel gewährleistet werden.

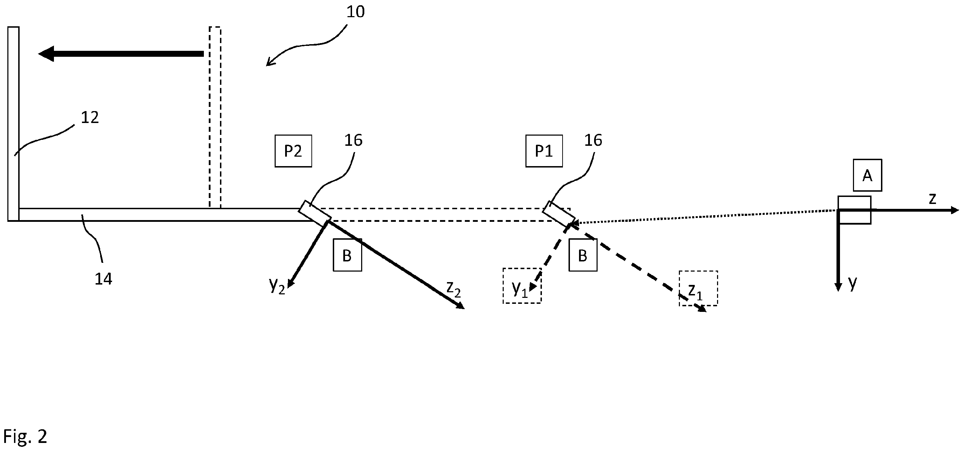

Dem erfindungsgemäßen Verfahren zum Ermitteln der räumlichen Anordnung einer Sensoreinheit bezüglich eines Koordinatensystems A des Lasttragmittels liegt dabei die Idee zugrunde, dass sich während des Kalibriervorgangs das Koordinatensystem A durch eine oder mehrere Arbeitsfunktionen des Flurförderzeugs gegenüber dem Flurförderzeug in bekannter Richtung verschiebt. Durch Aufnahme der Palette als zumindest während des Kalibriervorgangs ortsfestem und abseits des Flurförderzeugs liegenden Objekt in unterschiedlichen Positionen, gemessen im kartesischen Koordinatensystem B der Sensoreinheit, kann in einfacher Weise eine Kalibrierung der Sensoreinheit erfolgen. Dabei erfolgt eine Koordinatentransformation, wie insbesondere in Fig. 2 zu erkennen.

In Fig. 2 ist die Sensoreinheit 16 an einer der Gabeln 14 des Lasttragmittels 10 angeordnet, die Sensoreinheit kann jedoch alternativ am Gabelrücken 12 angeordnet sein. Gegenüber der ersten Position P1 ist das Lasttragmittel 10 und damit die Sensoreinheit 16 in der zweiten Position P2 um die Distanz $d_1$ entlang der z-Achse mittels des Mastvorschubs verschoben, wie bereits zu Fig. 1 erläutert. Die erste Position P1 ist in Figur 2 durch gestrichelte Linien verdeutlicht. Wie ersichtlich ist, ist die Sensoreinheit nach unten geneigt angeordnet. Die Positionsmessung an der Position P1 ergibt drei Raumkoordinaten $x_1$, $y_1$, $z_1$ im Koordinatensystem B, während die Positionsmessung an der Position P2 drei Raumkoordinaten $x_2$, $y_2$, $z_2$ im Koordinatensystem B ergibt. In der erläuterten Weise wird auf Grundlage der Positionen P1 und P2 sowie der zwischen diesen liegenden Distanz $d_1$ auf das Koordinatensystem A umgerechnet.

Bei der verwendeten Sensoreinheit kann es sich grundsätzlich um jeden für die Aufnahme dreier Raumkoordinaten geeigneten Sensor handeln, beispielsweise um eine 3D-Kamera, einen Time-of-Flight-Sensor, ein 3D-Lidar, Ultraschall oder Millimeterwellenradar. Auch sind 2D-Kameras verwendbar, sofern die Positionsbestimmung in Bezug auf ein Objekt bekannter Größe erfolgt oder durch Erkennen an dem Objekt angeordneter Elemente, bspw. Marker.

Bezugszeichenliste

| | |
|---|---|
| 10 | Lasttragmittel |
| 12 | Gabelrücken |
| 14 | Gabelarme |
| 16 | Sensoreinheit |
| 20 | Palette |
| 22 | Gabelaufnahme |
| 24 | Untergrund |
| A, B | Koordinatensysteme |
| P1 | erste Position |
| P2 | zweite Position |
| $d_1$ | erste Distanz |

**Patentansprüche**

1. Verfahren zum Kalibrieren einer an einem Lasttragmittel (10) eines Flurförderzeugs angeordneten Sensoreinheit (16), mit den Schritten:

   a) Bestimmen einer ersten Position (P1) der Sensoreinheit (16) relativ zu einem abseits des Flurförderzeugs befindlichen Objekt (20),
   b) Verschieben der Sensoreinheit relativ zu dem Objekt (20) entlang einer bekannten ersten Verschiebungsrichtung um eine erste Distanz ($d_1$),
   c) Bestimmen einer zweiten Position (P2) der Sensoreinheit (16) relativ zu dem Objekt (20),
   d) Ermitteln der räumlichen Anordnung der Sensoreinheit (16) relativ zu dem die Sensoreinheit (16) aufweisenden Lasttragmittel (10) basierend auf den zwei Positionen (P1, P2), der Verschiebungsrichtung und der Distanz (di) zwischen den Positionen (P1, P2).

2. Verfahren nach Anspruch 1, **dadurch gekennzeichnet, dass** das Objekt ein durch das Flurförderzeug aufnehmbarer Ladungsträger, insbesondere eine Palette (20), ist.

3. Verfahren nach einem der Ansprüche 1 oder 2, **dadurch gekennzeichnet, dass** das Lasttragmittel (10) eine Lastgabel ist mit einem Gabelrücken (12) und mindestens einem sich vom dem Gabelrücken (12) forterstreckenden Gabelarm (14), wobei die Sensoreinheit (16) an dem Gabelrücken (12) oder an einem der Gabelarme (14) angeordnet ist.

4. Verfahren nach einem der vorhergehenden Ansprüche, **dadurch gekennzeichnet, dass** die Ausrichtung des Lasttragmittels (10) zu dem Objekt (20) bekannt ist.

5. Verfahren nach einem der vorhergehenden Ansprüche, **dadurch gekennzeichnet, dass** die Sensoreinheit (16) zunächst in eine Referenzposition relativ zu dem Objekt (20) gebracht wird.

**6.** Verfahren nach einem der vorhergehenden Ansprüche, **dadurch gekennzeichnet, dass** die räumliche Anordnung der Sensoreinheit (16) relativ zu dem Lasttragmittel (10) bezüglich zumindest eines Raumwinkels bekannt ist.

**7.** Verfahren nach einem der vorhergehenden Ansprüche, **gekennzeichnet durch**

- erneutes Verschieben der Sensoreinheit (16) relativ zu dem Objekt (20) entlang einer zu der ersten Verschiebungsrichtung senkrechten, ebenfalls bekannten zweiten Verschiebungsrichtung um eine zweite Distanz ($d_2$),
- Bestimmen einer dritten Position (P3) der Sensoreinheit (16) relativ zu dem Objekt,
- Ermitteln der räumlichen Anordnung der Sensoreinheit (16) relativ zu dem die Sensoreinheit (16) aufweisenden Lasttragmittel (10) basierend auf den drei Positionen (P1, P2, P3), den Verschiebungsrichtungen und den beiden Distanzen ($d_1$, $d_2$).

**8.** Verfahren nach einem der vorhergehenden Ansprüche, **gekennzeichnet durch** Ermitteln der ersten Distanz ($d_i$) und/oder Ermitteln der zweiten Distanz ($d_2$).

**9.** Verfahren nach Anspruch 8, **dadurch gekennzeichnet, dass** die erste Distanz ($d_i$) als euklidischer Abstand zwischen der ersten Position (P1) und der zweiten Position (P2) und/oder die zweite Distanz ($d_2$) als euklidischer Abstand zwischen der zweiten Position (P2) und der dritten Position (P3) ermittelt wird..

**10.** Verfahren nach einem der vorhergehenden Ansprüche, **dadurch gekennzeichnet, dass** das Verschieben der Sensoreinheit (16) relativ zu dem Objekt (20) jeweils entlang nur einer Raumachse erfolgt.

**11.** Verfahren nach einem der vorhergehenden Ansprüche, **dadurch gekennzeichnet, dass** die Sensoreinheit (16) durch Verfahren des Flurförderzeugs relativ zu dem Objekt (20) verschoben wird.

**12.** Verfahren nach einem der vorhergehenden Ansprüche, **dadurch gekennzeichnet, dass** die Sensoreinheit (16) durch Einfahren oder Ausfahren eines das Lasttragmittel (10) tragenden Schubmastes des Flurförderzeugs und/oder durch Einfahren oder Ausfahren eines das Lasttragmittel (10) tragenden Hubmastes des Flurförderzeugs relativ zu dem Objekt (20) verschoben wird.

**13.** Verfahren nach einem der vorhergehenden Ansprüche, **dadurch gekennzeichnet, dass** der Kalibriervorgang während des Betriebs des Flurförderzeugs wiederholt wird.

**14.** Verfahren nach einem der vorhergehenden Ansprüche, **dadurch gekennzeichnet, dass** der Kalibriervorgang über ein Bedienelement des Flurförderzeugs durch eine Bedienperson gestartet wird.

**15.** Flurförderzeug mit einer Steuereinheit, die dazu ausgebildet ist, das Verfahren nach einem der vorhergehenden Ansprüche auszuführen.

Fig. 1

EP 3 872 521 A1

Fig. 2

**Europäisches Patentamt**
**European Patent Office**
**Office européen des brevets**

# EUROPÄISCHER RECHERCHENBERICHT

Nummer der Anmeldung

EP 21 15 2485

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 3 000 772 A1 (BT PRODUCTS AB [SE]) 30. März 2016 (2016-03-30) * Absätze [0003] - [0048], [0051] - [0080] * * Abbildungen 1-4 * | 1-15 | INV. G01S7/48 G01S17/88 G01S17/89 G01S17/931 B66F9/06 |
| A | DE 10 2015 103542 A1 (GM GLOBAL TECH OPERATIONS INC [US]) 1. Oktober 2015 (2015-10-01) * Absätze [0001] - [0005], [0009] - [0035] * * Abbildungen 1, 2 * | 1-15 | B66F9/075 B66F9/20 B66F9/24 G01S7/40 G01S7/497 |
| A,D | EP 3 219 663 A1 (BALYO [FR]) 20. September 2017 (2017-09-20) * Absätze [0039] - [0065]; Abbildungen 1,2 * | 1-15 | |
| A | DE 10 2010 062696 A1 (BOSCH GMBH ROBERT [DE]) 14. Juni 2012 (2012-06-14) * Absätze [0055] - [0067] * * Abbildung 3 * | 1-15 | |

RECHERCHIERTE SACHGEBIETE (IPC)

G01S
B66F

Der vorliegende Recherchenbericht wurde für alle Patentansprüche erstellt

| Recherchenort | Abschlußdatum der Recherche | Prüfer |
|---|---|---|
| München | 8. Juli 2021 | Kruck, Peter |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 21 15 2485

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

08-07-2021

| Im Recherchenbericht angeführtes Patentdokument | Datum der Veröffentlichung | Mitglied(er) der Patentfamilie | Datum der Veröffentlichung |
|---|---|---|---|
| EP 3000772 A1 | 30-03-2016 | EP 3000772 A1<br>US 2016090284 A1 | 30-03-2016<br>31-03-2016 |
| DE 102015103542 A1 | 01-10-2015 | CN 104943694 A<br>DE 102015103542 A1<br>US 2015276923 A1 | 30-09-2015<br>01-10-2015<br>01-10-2015 |
| EP 3219663 A1 | 20-09-2017 | AU 2017201671 A1<br>CN 107199967 A<br>DK 3219663 T3<br>EP 3219663 A1<br>ES 2713683 T3<br>SG 10201702205X A<br>US 2017269598 A1 | 05-10-2017<br>26-09-2017<br>18-03-2019<br>20-09-2017<br>23-05-2019<br>30-10-2017<br>21-09-2017 |
| DE 102010062696 A1 | 14-06-2012 | CN 103250069 A<br>DE 102010062696 A1<br>EP 2649467 A1<br>US 2013325252 A1<br>WO 2012076468 A1 | 14-08-2013<br>14-06-2012<br>16-10-2013<br>05-12-2013<br>14-06-2012 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3219663 A1